(19) **Europäisches Patentamt**

**European Patent Office**

**Office européen des brevets**

(11) Veröffentlichungsnummer: **0 491 172 A1**

## (12) EUROPÄISCHE PATENTANMELDUNG

(21) Anmeldenummer: **91119642.6**

(22) Anmeldetag: **18.11.91**

(51) Int. Cl.5: **B60T 17/20**

(30) Priorität: **18.12.90 DE 4040506**

(43) Veröffentlichungstag der Anmeldung:
**24.06.92 Patentblatt 92/26**

(84) Benannte Vertragsstaaten:
**DE FR GB IT SE**

(71) Anmelder: **KNORR-BREMSE AG**
**Moosacher Strasse 80 Postfach 401060**
**W-8000 München 40(DE)**

(72) Erfinder: **Wosegien, Brend**
**Angerweg 8**
**W-8000 München 83(DE)**

(54) **Notbremseinrichtung für Druckluftbremsen von Schienenfahrzeugen.**

(57) Die Notbremseinrichtung für Schienenfahrzeuge weist ein kolbenbetätigbares Entlüftungsventil (4) für die Hauptluftleitung auf, welches vermittels eines handbetätigbaren Notbremsventils (33) steuerbar ist. Um eine Notbremsung an hierzu ungeeigneten Streckenabschnitten unterdrücken zu können, ist das Entlüftungsventil (4) von einem von einer Feder (20) belasteten Riegelkolben (18) in Schließrichtung belastbar und ein zweiter Riegelkolben (24) vermag den ersterwähnten Riegelkolben (18) in seiner geschlossenem Entlüftungsventil (4) entsprechenden Stellung zu verriegeln. Diese Verriegelung des Entlüftungsventils (4) ist durch Druckabsenken in der Hauptluftleitung unter eine bei Notbremsbetätigung erreichbare Restdruckhöhe einstellbar und nur durch Einsteuern einer die Regeldruckhöhe übersteigenden Druckhöhe in der Hauptluftleitung wieder aufhebbar. Bei in Schließstellung verriegeltem Entlüftungsventil (4) können die Bremsen gelöst werden und das Schienenfahrzeug kann bis zum Erreichen eines zum Anhalten geeigneten Streckenabschnittes weiterfahren.

Fig. 1

EP 0 491 172 A1

Die Erfindung bezieht sich auf eine Notbremseinrichtung für indirekt wirkende Druckluftbremsen von Schienenfahrzeugen, mit einem einer Hauptluftleitung zugeordneten, in Schließrichtung federbelasteten Entlüftungsventil, das von einem Kolben betätigbar ist, der in Öffnungsrichtung wirkend vom Druck in einer ersten Steuerkammer entgegen dem Druck in einer zweiten Steuerkammer beaufschlagt ist, wobei beide Steuerkammern über je eine eigene Düse an die Hauptluftleitung angeschlossen sind und wobei an die zweite Steuerkammer wenigstens ein als handbetätigbares Auslaßventil ausgebildetes Notbremsventil angeschlossen ist, und mit einer Vorrichtung zum Unterdrücken von Notbremsungen.

Derartige Notbremseinrichtungen sind aus der DE-B 25 55 363 sowie der DE-A 36 23 062 bekannt. Bei diesen vorbekannten Einrichtungen ist in die Verbindungsleitung von der zweiten Steuerkammer zum von den Fahrgästen bedienbaren Notbremsventil jeweils ein Magnetventil eingeordnet, welches vom Fahrzeugführer schaltbar ist und durch welches der freie Durchgang durch diese Verbindungsleitung zumindest größtenteils absperrbar ist. Dieses Magnetventil dient dem Unterdrükken von Notbremsungen, im geschlossenen Zustand trennt es das Notbremsventil so weitgehend von der zweiten Steuerkammer ab, daß letztere nicht mehr ausreichend entlüftbar ist, um den Kolben zum Öffnen des Entlüftungsventils zu bewegen. Diese Notbrems-Unterdrückung ist erforderlich, um ein Anhalten des Schienenfahrzeuges an einem hierzu ungeeigneten Streckenabschnitt, beispielsweise in einem Tunnel oder auf einer Brücke, vermeiden zu können. Bei guter Funktionsfähigkeit benötigen diese bekannten Notbremseinrichtungen elektrische Signalleitungen, welche eine nicht immer vorhandene Sonderausstattung darstellen und welche bei zu einem Zug gekuppelten Schienenfahrzeugen durch den Zug durchzukuppeln sind, was mitunter unsichere Kontaktstellen bedingt.

Es ist Aufgabe der Erfindung, eine Notbremseinrichtung der eingangs genannten Art mit einfachen Mitteln derart auszugestalten, daß sie rein pneumatisch wirkt, also keine elektrische Signalleitungen erfordert.

Diese Aufgabe wird nach der Erfindung dadurch gelöst, daß ein erster Riegelkolben vorgesehen ist, der in Schließrichtung des Entlüftungsventils wirkend mit dessen beweglichem Verschlußglied koppelbar ist, und daß ein zweiter Riegelkolben zum Verriegeln des ersten Riegelkolbens in dessen geschlossenem Entlüftungsventil entsprechender Stellung vorgesehen ist, wobei beide Riegelkolben in Schließ- bzw. Verriegelungsrichtung von jeweils einer eigenen Feder entgegen dem Druck in der zweiten Steuerkammer beaufschlagt sind.

Den Unteransprüchen sind nach der weiteren Erfindung vorteilhafte Ausgestaltungsmöglichkeiten für eine derartige Notbremseinrichtung entnehmbar.

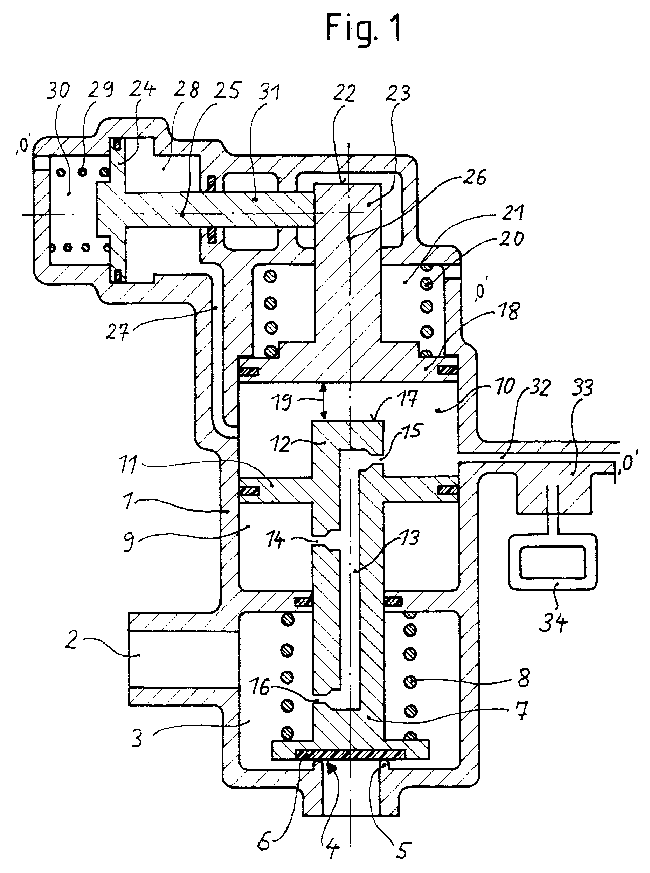

In der Zeichnung Fig.1 bis Fig.3 ist ein Ausführungsbeispiel für eine nach der Erfindung ausgebildete Notbremseinrichtung in unterschiedlichen Schaltstellungen schematisch dargestellt.

In einem Gehäuse 1 befindet sich ein über einen Rohranschluß 2 an die Hauptluftleitung einer im weiteren nicht dargestellten Druckluftbremse angeschlossener Raum 3, welcher über ein großquerschnittiges Entlüftungsventil 4 mit der Atmosphäre verbindbar ist. Das Entlüftungsventil 4 ist von einem gehäusefesten Ventilsitz 5 und einem beweglichen Verschlußglied 6 gebildet, letzteres befindet sich am Ende einer abgedichtet verschieblich in den Raum 3 ragenden Ventilstange 7. Eine Feder 8 belastet das Verschlußglied 6 in Aufsetzrichtung auf den Ventilsitz 7. Die Ventilstange 7 durchragt eine an den Raum 3 anschließende, erste Steuerkammer 9, trägt einen diese von einer zweiten Steuerkammer 10 abtrennenden Kolben 11 und endet in der zweiten Steuerkammer 10 mit einem vom Kolben 11 vorspringenden Ansatz 12. Die Ventilstange 7 ist mit einem Axialkanal 13 versehen, welcher mit dem Raum 3 und über je eine Düse 14 bzw. 15 mit der ersten Steuerkammer 9 und der zweiten Steuerkammer 10 in Verbindung steht; die Einmündung 16 des Axialkanals 13 in den Raum 3 kann ebenfalls düsenartig ausgebildet sein. Der Stirnfläche 17 des Ansatzes 12 steht ein die zweite Steuerkammer 10 begrenzender, erster Riegelkolben 18 gegenüber und bildet mit diesem eine Anschlagkupplung 19, welche eine Kraftübertragung vom ersten Riegelkolben 18 auf die Ventilstange 7 in Schließrichtung des Entlüftungsventils 4 ermöglicht. Gegenüberliegend zur zweiten Steuerkammer 10 ist der erste Riegelkolben 18 von einer Feder 20 belastet, welche in einem mit der Atmosphäre in Verbindung stehenden Raum 21 angeordnet sit. Seitens des Raumes 21 trägt der erste Riegelkolben 18 einen mit einer Anschlagfläche 22 endenden Ansatz 23.

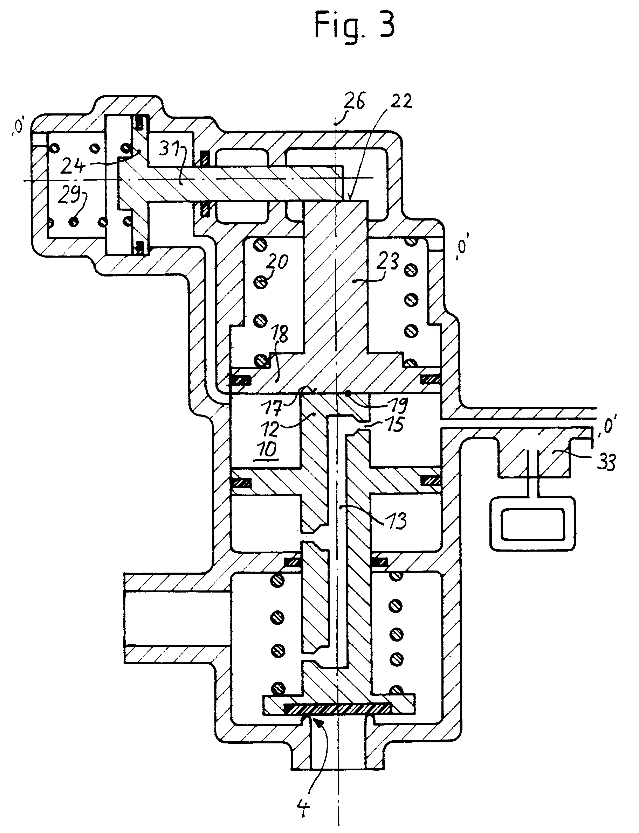

Nahe des dem Entlüftungsventil 4 abgewandten Endes ist im Gehäuse 1 ein zweiter Riegelkolben 24 gelagert, dessen Achse 25 die gemeinsame Achse 26 des Kolbens 11, der Ventilstange 7 und des ersten Riegelkolbens 18 rechtwinklig schneidet. Der zweite Riegelkolben 24 ist zur Achse 26 seitlich versetzt angeordnet, er ist in Entfernungsrichtung von der Achse 26 über eine Kanalverbindung 27 und einen Beaufschlagungsraum 28 vom Druck in der zweiten Steuerkammer 10 beaufschlagt. Andererseits ist der zweite Riegelkolben 24 von der Kraft einer Feder 29 belastet, welche sich in einem mit der Atmosphäre in Verbindung stehenden Raum 30 befindet. Seitens der Achse 26 trägt der zweite Riegelkolben 24 einen Ansatz 31, welcher in der Schaltstellung nach Fig.1 bei der Achse 26 abgewandter Endstellung des zweiten Riegelkolbens 24 und dem Entlüftungsventil 4 abgewandter Endstellung des ersten Riegelkolbens 18 seitlich neben dem Ansatz 23 endet; bei entgegengesetzten Endstellungen des ersten und des zweiten Riegelkolbens 18 und 24 übergreift der Ansatz 31 die Anschlagfläche 22 und bildet zusammen mit dieser eine Anschlagvorrichtung 22,31, welche den zweiten Riegelkolben 18 in dieser Endstellung verriegelt, wie es in Fig.3 dargestellt ist.

Die zweite Steuerkammer 10 ist über eine Leitungsverbindung 32 mit wenigstens einem handbetätigbaren, als Auslaßventil ausgebildeten Notbremsventil 33 verbunden, welches wie üblich ausgebildet ist, beispielsweise wie in der eingangs erwähnten DE-B 25 55 363 dargestellt gestaltet sein kann. Im unbetättigten Zustand hält das Notbremsventil 33 die Leitungsverbindung 32 von der Atmosphäre abgetrennt, bei Betätigung, welche beispielsweise durch Ziehen am Notbremshandgriff 34 erfolgt, verbindet es die Leitungsverbindung 32 mit der Atmosphäre und hält auch nach Freigabe des Notbremshandgriffes 34 diese Verbindung aufrecht, so daß die zweite Steuerkammer 10 sich rasch in die Atmosphäre entleert. Das Notbremsventil 33 kann derart ausgestaltet sein, daß es nur vermittels eines Schaffnerschlüssels in seine unbetätigte, die Leitungsverbindung 32 wieder von der Atmosphäre abtrennende Ruhestellung zurückstellbar ist.

Bei der in europäischen Bahnen allgemein für den Lösezustand der Druckluftbremsen vorgesehen Regeldruckhöhe in der Hauptluftleitung von 5 bar ist es zweckmäßig, die Schaltdrücke der beiden Riegelkolben 18 und 24 durch deren Dimensionierung bzw. entsprechende Dimensionierung der Federn 20 bzw. 29 derart festzulegen, daß der erste Riegelkolben 18 bis zu einem Druck von ca. 2 bar in der zweiten Steuerkammer 10 von der Feder 20 in seine dem Entlüftungsventil 4 zugewandte Endstellung bewegbar ist und der zweite Riegelkolben 24 bis zu einem Druck von ca. 5,5 bar in der zweiten Steuerkammer 10 und damit seinem Beaufschlagungsraum 28 von der Feder 29 zu seiner der Achse 26 zugewandten Endstellung hin bewegbar ist.

Im Ruhezustand nimmt die Notbremseinrichtung die aus Fig.1 ersichtliche Schaltstellung ein, in welcher das Entlüftungsventil 4 geschlossen ist, der erste Riegelkolben 18 sich in seiner dem Entlüftungsventil 4 abgewandten Endstellung und der zweite Riegelkolben 24 sich in seiner der Achse 26 abgewandten Endstellung befindet. Bei gelöster Druckluftbremse herrscht in deren Hauptluftleitung und damit auch dem Raum 3 die Regeldruckhöhe von beispielsweise 5 bar, diese Druckhöhe herrscht infolge der Verbindung durch den Axialkanal 13 und die Düsen 14 bzw. 15 auch in der ersten und der zweiten Steuerkammer 9 bzw. 10 und damit auch im Beaufschlagungsraum 28 und der Leitungsverbindung 32, welche durch das Notbremsventil 33 von der Atmosphäre abgetrennt ist. Der Ansatz 31 liegt mit seiner Stirnfläche an der Seitenwandung des Ansatzes 23 an und hält so den zweiten Riegelkolben 24 in der dargestellten Lage.

Wird der Druck in der Hauptluftleitung zu Betriebsbremsungen abgesenkt, so sinkt der Druck im Raum 3 entsprechend mit ab, über den Axialkanal 13 und die Düsen 14 und 15 werden die Drücke in der ersten und zweiten Steuerkammer 9 bzw. 10 entsprechend mitabgesenkt, wobei durch entsprechende Dimensionierung der Düsen 14 und 15 sichergestellt ist, daß die Druckabsenkung in der zweiten Steuerkammer 10 derjenigen in der ersten Steuerkammer 9 nicht voreilt. Da während Betriebsbremsungen der Druck in der Hauptluftleitung nicht unter etwa 3,5 bar abgesenkt wird, verbleiben hierbei die beiden Riegelkolben 18 und 24 in ihren dargestellten Stellungen.

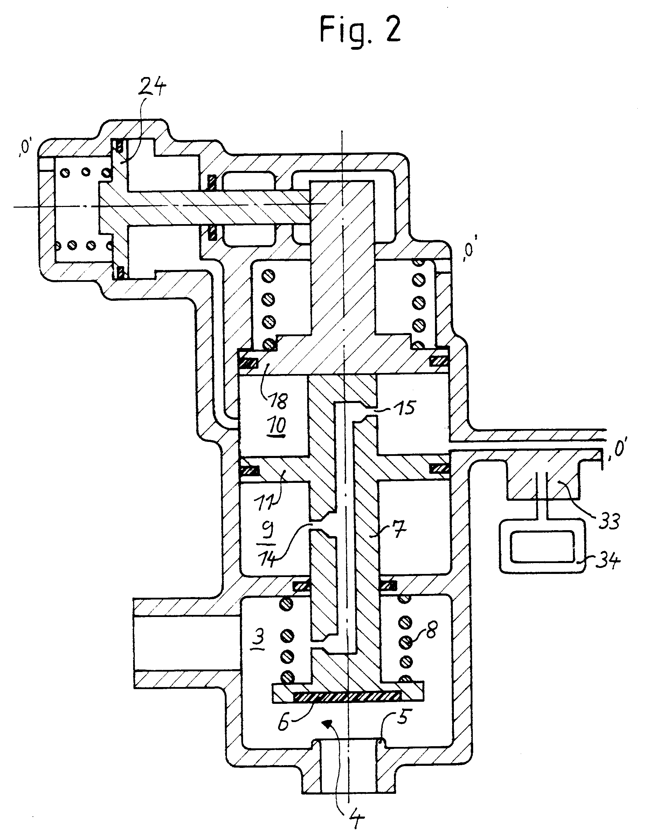

Wird während dieses normalen Fahrbetriebes das Notbremsventil 33 durch Ziehen am Notbremshandgriff 34 betätigt und somit die zweite Steuerkammer 10 zur Atmosphäre hin entlüftet, so kann sich die in der zweiten Steuerkammer 10 auftretende Druckabsenkung infolge der Düsen 15 und 14 nur verzögert in die erste Steuerkammer 9 übertragen, d.h. am Kolben 11 tritt eine Druckdifferenz auf, welche diesen in Richtung zum zweiten Riegelkolben 18 verschiebt und hierbei über die Ventilstange 7 das Entlüftungsventil 4 durch Abheben des Verschlußgliedes 6 vom Ventilsitz 5 öffnet. Diese Schaltstellung der Notbremseinrichtung ist in Fig.2 dargestellt. Nunmehr strömt Druckluft aus der Hauptluftleitung über das großquerschnittige, geöffnete Entlüftungsventil 4 zur Atmosphäre ab und es erfolgt somit eine Notbremsung. Sobald der Hauptluftleitungsdruck und damit der Druck im Raum 3 auf einen Wert zwischen etwa 2 bar bis 3,5 bar abgesunken ist, ist auch der Druck in der ersten Steuerkammer 9 so weit abgesunken, daß die Feder 8 die Ventilstange 7 mitsamt dem Kolben 11 bis zum Aufsetzen des Verschlußgliedes 6 auf den Ventilsitz 5 zu verschieben vermag, das Entlüftungsventil 4 wird also unter Erhalten eines Restdruckes in der Hauptluftleitung wieder geschlossen, die Notbremsung dauert jedoch an.

Erfolgt, ausgehend vom Ruhezustand der Notbremseinrichtung nach Fig.1, eine Betätigung des Notbremsventils 33 an einem für das Anhalten des Schienenfahrzeuges ungünstigen Streckenabschnitt, so kann der Fahrzeugführer, sobald er die Betätigung des Notbremsventils 33 durch das Absinken des Hauptluftleitungsdruckes, beispielsweise durch Druckablesen am den Hauptluftleitungsdruck anzeigenden Manometer, bemerkt, eine Schnellbremsung mit völliger Entleerung der Hauptluftleitung einsteuern. Durch Betätigen des Notbremsventils 33 öffnet sich jedenfalls vorübergehend das Entlüftungsventil 4 und schließt sich dann bei Erreichen eines niedrigen Restdruckes in der Hauptluftleitung wieder, wie es vorstehend zur Notbremsung beschrieben wurde. Durch die vom Fahrzeugführer bewirkte Notbremsung sinkt der Hauptluftleitungsdruck und damit über den Axialkanal 13 und die Düse 15 auch der Druck in der zweiten Steuerkammer 10 jedenfalls unter 2 bar bis zumindest nahezu auf atmosphären Druck ab, worauf hin die Feder 20 den ersten Schaltkolben 18 in Richtung zum Entlüftungsventil 4 zu bewegen vermag, wobei unter Schließen der Anschlagkupplung 19 der erste Schaltkolben 18 sich auf die Stirnfläche 17 des Ansatzes 12 auflegt. Die Stirnfläche des Ansatzes 31 gelangt dabei außer Eingriff zur Seitenwandung des Ansatzes 23. Anschließend drückt die Feder 29 den zweiten Schaltkolben 24 in Richtung zur Achse 26, wobei der Ansatz 31 vor die Anschlagfläche 22 des Ansatzes 23 gelangt und somit durch Schließen der Anschlagvorrichtung 22,31 der erste Riegelkolben 18 in seiner das Entlüftungsventil 4 geschlossen haltenden Stellung verriegelt wird. Die Notbremseinrichtung befindet sich dann in der in Fig.3 dargestellten Schaltstellung. Nunmehr kann vom Fahrzeugführer der Druck in der Hauptluftleitung wieder auf die Regeldruckhöhe von beispielsweise 5 bar angehoben werden, wobei sich die Druckluftbremse löst. Diese vorstehend geschilderten Vorgänge laufen relativ rasch ab, so daß das Schienenfahrzeug, ausgehend von normaler Fahrgeschwindigkeit, nicht zum Anhalten gelangt, sondern lediglich seine Fahrgeschwindigkeit während der kurzzeitigen Bremsenbetätigung etwas verringert. Nach dem vorstehend geschilderten Wiederlösen der Fahrzeugbremsen durch Einspeisen von Regeldruckhöhe in die Hauptluftleitung kann die Fahrt fortgesetzt werden, bis ein zum Anhalten des Schienenfahrzeuges günstiger Streckenabschnitt erreicht wird; dort kann der Fahrzeugführer das Schienenfahrzeug durch eine geeignete Bremsung anhalten.

Zum Rückstellen der Notbremseinrichtung aus ihrer Schaltstellung nach Fig.3 in die Normalstellung nach Fig.1 ist nach einem Schließen des betätigten Notbremsventils 33 vom Fahrzeugführer in die Hauptluftleitung eine Drucküberhöhung von zumindest 5,5 bar einzuspeisen. Diese Drucküberhöhung gelangt auch in die zweite Steuerkammer 10 und durch die Kanalverbindung 27 in den Beaufschlagungsraum 28, woraufhin der zweite Riegelkolben 24 entgegen der Kraft der Feder 9 in seine der Achse 26 entfernte Endstellung gedrückt wird. Der Ansatz 31 gelangt dabei außer Eingriff zur Anschlagfläche 22, die Anschlagvorrichtung 22,31 wird also gelöst, und der in der zweiten Steuerkammer 10 herrschende Druck vermag den ersten Riegelkolben 18 entgegen der Kraft der Feder 20 in seine vom Entlüftungsventil 4 entfernte Endstellung zu drücken. Am Kolben 11 tritt hierbei durch entsprechende Bemessung der Düsen 14 und 15 keine in Öffnungsrichtung des Entlüftungsventils 4 wirkende Druckdifferenz auf, das Entlüftungsventil 4 bleibt also geschlossen. Damit ist die in Fig.1 dargestellte Ruhestellung der Notbremseinrichtung wieder erreicht.

Anschließend kann der Druck in der Hauptluftleitung beispielsweise in der für Angleichvorgänge üblichen Art wieder auf Regeldruckhöhe abgesenkt werden.

Falls abweichend zu den vorstehend geschilderten Funktionsvorgängen während einer Notbrembetätigung mit geöffnetem Notbremsventil 33 mangels einer Druckluftnachspeisung in die Hauptluftleitung der Druck in der zweiten Steuerkammer 10 unter etwa 2 bar absinkt, so vermag die Feder 20 den ersten Riegelkolben 18 bei bereits wieder geschlossenem Entlüftungsventil 4 auf die Stirnfläche 17 aufzusetzen und unter der Kraft der Feder 29 schließt sich sodann die Anschlagvorrichtung 22,31 wie vorstehend geschildert, so daß die aus Fig.3 ersichtliche Schaltstellung erreicht wird. Die Notbremseinrichtung kann aus dieser Schaltstellung wie vorstehend geschildert nach Schließen des Notbremsventils 33 durch kurzzeitiges Einsteuern eines überhöhten Druckes von beispielsweise 5,5 bar in die Hauptluftleitung in ihre Ruhestellung nach Fig.1 zurückgeschaltet werden, wobei sich der zweite Riegelkolben 24 und sodann der erste Riegelkolben 18 entgegen ihrer Federbelastung 29 bzw. 20 verschieben.

Bei Inbetriebnahme eines mit entlüfteter Hauptluftleitung abgestellten Schienenfahrzeuges befindet sich die Notbremseinrichtung bei allerdings geschlossenem Notbremsventil 33 in der aus Fig.3 ersichtlichen Schaltstellung. Zum Überführen in die aus Fig.1 ersichtliche Ruhestellung muß ebenfalls lediglich kurzzeitig ein überhöhter Hauptluftleitungsdruck von 5,5 bar eingesteuert werden, wobei sich die beiden Riegelkolben 24 und 18 in ihre Normallage nach Fig.1 bewegen. Anschließend ist normaler Fahrbetrieb möglich.

Die Feder 8 kann auch schwächer als vorstehend erwähnt ausgebildet werden, in der Hauptluftleitung verbleibt dann nach Betätigen der Notbremseinrichtung ein entsprechend niedrigerer Restdruck und die Notbremseinrichtung gelangt ggf. bei jeder Notbremsbetätigung vermittels des Notbremsventils 33 in die aus Fig.3 ersichtliche Schaltstellung. Aus dieser Schaltstellung nach Fig.3 können durch Einspeisen von Regeldruckhöhe in die Hauptluftleitung die Bremsen des Schienenfahrzeuges gelöst werden und das Fahrzeug kann in einen zum Anhalten geeignetem Streckenabschnitt weitergefahren werden. Bei dieser Ausbildung der Notbremseinrichtung mit schwacher Feder 8 ergibt sich jedoch durch unnötig weite Druckabsenkung in der Hauptluftleitung während Notbremsungen eine Energieverschwendung und außerdem kann das Wiederlösen der Bremsen nach einer Notbremsbetätigung erst nach dem bei geschwächter Federart späteren Schließen des Entlüftungsventils (4) erfolgen, das Schienenfahrzeug wird also zwischenzeitlich etwas länger und damit auf eine etwas niedrigere Fahrgeschwindigkeit abgebremst bei stärkerer Feder 8.

Kurzfassung:

Die Notbremseinrichtung für Schienenfahrzeuge weist ein kolbenbetätigbares Entlüftungsventil (4) für die Hauptluftleitung auf, welches vermittels eines handbetätigbaren Notbremsventils (33) steuerbar ist. Um eine Notbremsung an hierzu ungeeigneten Streckenabschnitten unterdrücken zu können, ist das Entlüftungsventil (4) von einem von einer Feder (20) belasteten Riegelkolben (18) in Schließrichtung belastbar und ein zweiter Riegelkolben (24) vermag den ersterwähnten Riegelkolben (18) in seiner geschlossenem Entlüftungsventil (4) entsprechenden Stellung zu verriegeln. Diese Verriegelung des Entlüftungsventils (4) ist durch Druckabsenken in der Hauptluftleitung unter eine bei Notbremsbetätigung erreichbare Restdruckhöhe einstellbar und nur durch Einsteuern einer die Regeldruckhöhe übersteigenden Druckhöhe in der Hauptluftleitung wieder aufhebbar. Bei in Schließstellung verriegeltem Entlüftungsventil (4) können die Bremsen gelöst werden und das Schienenfahrzeug kann bis zum Erreichen eines zum Anhalten geeigneten Streckenabschnittes weiterfahren.

**Bezugszeichenliste**

| 1 | Gehäuse |
|---|---------|
| 2 | Rohranschluß |
| 3 | Raum |
| 4 | Entlüftungsventil |
| 5 | Ventilsitz |
| 6 | Verschlußglied |
| 7 | Ventilstange |
| 8 | Feder |
| 9 | 1. Steuerkammer |
| 10 | 2. Steuerkammer |
| 11 | Kolben |
| 12 | Ansatz |
| 13 | Axialkanal |
| 14 | Düse |
| 15 | Düse |
| 16 | Einmündung |
| 17 | Stirnfläche |
| 18 | 1. Riegelkolben |
| 19 | Anschlagkupplung |

| 20 | Feder |
|---|---------|
| 21 | Raum |
| 22 | Anschlagfläche |
| 23 | Ansatz |
| 24 | 2. Riegelkolben |
| 25 | Achse |
| 26 | Achse |
| 27 | Kanalverbindung |
| 28 | Beaufschlagungsraum |
| 29 | Feder |
| 30 | Raum |
| 31 | Ansatz |
| 22,31 | Anschlagvorrichtung |
| 32 | Leitungsverbindung |
| 33 | Notbremsventil |
| 34 | Notbremshandgriff |

**Patentansprüche**

1. Notbremseinrichtung für indirekt wirkende Druckluftbremsen von Schienenfahrzeugen, mit einem einer Hauptluftleitung zugeordneten, in Schließrichtung federbelasteten Entlüftungsventil (4), das von einem Kolben (11) betätigbar ist, der in Öffnungsrichtung wirkend vom Druck in einer ersten Steuerkammer (9) entgegen dem Druck in einer zweiten Steuerkammer (10) beaufschlagt ist, wobei beide Steuerkammern (9 und 10) über je eine eigene Düse (14 bzw. 15) an die Hauptluftleitung angeschlossen sind und wobei an die zweite Steuerkammer (10) wenigstens ein als handbetätigbares Auslaßventil ausgebildetes Notbremsventil (33) angeschlossen ist, und mit einer Vorrichtung zum Unterdrücken von Notbremsungen, dadurch gekennzeichnet, daß ein erster Riegelkolben (18) vorgesehen ist, der in Schließrichtung des Entlüftungsventils (4) wirkend mit dessen beweglichem Verschlußglied (6) koppelbar ist, und daß ein zweiter Riegelkolben (24) zum Verriegeln des ersten Riegelkolbens (18) in dessen geschlossenem Entlüftungsventil (4) entsprechender Stellung vorgesehen ist, wobei beide Riegelkolben (18 und 24) in Schließ- bzw. Verriegelungsrichtung von jeweils einer eigenen Feder (20 bzw. 29) entgegen dem Druck in der zweiten Steuerkammer (10) beaufschlagt sind.

2. Notbremseinrichtung nach Anspruch 1, dadurch gekennzeichnet, daß der erste Riegelkolben (18) gleichachsig zum Kolben (11) auf dessen dem Entlüftungsventil (4) abgewandter Seite angeordnet und durch eine Anschlagkupplung (19) mit dem Kolben (11) koppelbar ist.

3. Notbremseinrichtung nach Anspruch 2, dadurch gekennzeichnet, daß der zweite Riegelkolben (24) mit die Achse (26) des ersten Riegelkolbens (18) auf der dem Kolben (11) abgewandten Seite rechtwinklig schneidender Achse (25) angeordnet ist und daß zwischen beiden Riegelkolben (18 und 24) vermittels in Richtung zum Achsenschnittpunkt auskragender Ansätze (23 und 31) eine Anschlagvorrichtung (22,31) ausgebildet ist, derart, daß der Ansatz (31) des zweiten Riegelkolbens (24) das kolbenabgewandte Ende des Ansatzes (23) des ersten Riegelkolbens (18) nur in der von letzterem bewirkten Verschlußstellung des Entlüftungsventils (4) zu überdecken vermag.

4. Notbremseinrichtung nach einem oder mehreren der vorstehenden Ansprüche 1 bis 3, dadurch gekennzeichnet, daß der Schaltdruck des ersten Riegelkolbens (18) niedriger als der Schaltdruck des zweiten Riegelkolbens (24) ist.

5. Notbremseinrichtung nach Anspruch 4, für Druckluftbremsen mit einer Regeldruckhöhe von ca. 5 bar in der Hauptluftleitung, gekennzeichnet durch derartige Dimensionierungen der beiden Riegelkolben (18 und 24) und der diese belastenden Federn (20 und 29) , daß die este Feder (20) den ersten Riegelkolben (18) bis zu einem Druck von ca. 2 bar in der zweiten Steuerkammer (10) in der geschlossenem Entlüftungsventil (4) entsprechenden Lage und die zweite Feder (29) den zweiten Riegelkolben (24) bis zu einem Druck von ca. 5,5 bar in der zweiten Steuerkammer (10) in der den ersten Riegelkolben (18) verriegelnden Lage zu halten vermag.

6. Notbremsventil nach einem oder mehreren der vorstehenden Ansprüche 1 bis 5, dadurch gekennzeichnet, daß das bewegliche Verschlußglied (6) des Entlüftungsventils (4) von einer dritten Feder (8) in Ventilschließrichtung belastet ist.

7. Notbremseinrichtung nach Anspruch 4 oder 5 und 6, dadurch gekennzeichnet, daß die das bewegliche Verschlußglied (6) belastende Feder (8) das Entlüftungsventil (4) bei einer Restdruckhöhe in der Hauptluftleitung zu schließen vermag, die niedriger als der einer Vollbremsung entsprechende Hauptluftleitungsdruck und höher als der Schaltdruck des ersten Riegelkolbens (18) ist.

# Fig. 1

# Fig. 2

# Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 408 013 (KNORR)<br>* das ganze Dokument *<br>--- | 1 | B60T17/20 |
| A,D | DE-A-3 623 062 (KNORR)<br>* das ganze Dokument *<br>----- | 1 | |
| | | | **RECHERCHIERTE SACHGEBIETE (Int. Cl.5 )**<br><br>B60T |

Der vorliegende Recherchenbericht wurde für alle Patentansprüche erstellt

| Recherchenort | Abschlußdatum der Recherche | Prüfer |
|---|---|---|
| BERLIN | 23 MAERZ 1992 | BLURTON M.D. |

EPO FORM 1503 03.82 (P0403)